# EUROPEAN PATENT SPECIFICATION

(11) **EP 1 095 983 B1**
(45) Date of publication and mention of the grant of the patent: **15.09.2004**
(21) Application number: 00123584.5
(22) Date of filing: 27.10.2000
(51) Int. Cl.: C08L 69/00

(54) **Polycarbonate resin composition having high impact resistance**
Polycarbonatzusammensetzung mit hoher Schlagzähigkeit
Composition de polycarbonate ayant une forte resistance aux chocs

(30) Priority: 28.10.1999 KR 9947104
(43) Date of publication of application: 02.05.2001
(73) Proprietor: Cheil Industries Inc., Kumi-shi, Kyungbuk (KR)
(72) Inventor: Seo, Kyung-Hoon, Seocho-gu, Seoul, 137-073 (KR); Yang, Sam-Joo, Suwon-shi, Kyungki-do 440-300 (KR)
(74) Representative: Grünecker, Kinkeldey, Stockmair & Schwanhäusser Anwaltssozietät

(56) References cited:
- GB-A- 2 332 203
- US-A- 4 384 076

## Description

### Field of the Invention

The present invention relates to a polycarbonate resin composition having high impact strength. More particularly, the present invention relates to a polycarbonate resin composition having high impact resistance, and little impact strength drop on recycling. Further, the present invention relates to a polycarbonate resin composition having high impact strength comprising a polycarbonate resin, a graft copolymer or an olefin copolymer as an impact modifier, a thermoplastic resin, and a polyolefin having a low number average molecular weight from 1,000 to 20,000 g/mol.

### Background of the Invention

Polycarbonate resin has been widely used as an engineering plastic for automobiles and electrical appliances because the resin is good in the impact strength, self-extinguishing property, dimensional stability, transparency, mechanical strength, and heat resistance. However, unlike other conventional impact resistant resins, the impact strength of the polycarbonate resin is sensitive to the molecular weight of the polycarbonate, circumstances of use, notch existence, residual stress, which would cause to drop the impact strength of the polycarbonate resin drastically on occasion. Furthermore, because the polycarbonate resin has a lower flowability than other thermoplastic resins, it requires a high molding temperature during the molding process. Accordingly the high temperature causes thermal degradation of the polycarbonate resin, resulting in reduction of the molecular weight. Also, in order to compensate the lower flowability, a high injection pressure and a high injection speed have been applied to the resin in the injection molding process. This process provides a certain part of a molded article with significant residual stress. Such thermal degradation and residual stress can deteriorate the impact strength of the molded article. In addition, the impact strength depends on the circumstance such as use of the molded article at high temperature and exposure of the molded article to a chemical. In other words, under these circumstances, the impact strength is deteriorated. Accordingly, the practical use of polycarbonate resin is narrowly limited.

Intensive researches have been done to overcome the thermal degradation, residual stress, and affect by the circumstances for the molded article to be used, which are drawbacks of polycarbonate resin. One of the conventional methods to improve impact strength of polycarbonate resin is to introduce an impact modifier to the polycarbonate resin. U.S. Patent No. 3,431,224 discloses a resin mixture comprising (1) polycarbonate and (2) an impact modifier selected from the group consisting of polyethylene, polypropylene, ethylene-propylene copolymer, polyurethane etc as an impact modifier. The resin mixture had improved impact strength and resistance to chemicals. However, when the polyolefin such as polyethylene and polypropylene is used in excess of a certain amount, the weld strength is severely deteriorated, and a delamination occurs due to low compatibility between polycarbonate and polyolefin. The researches were focused on the effect of the amount of polyolefin and the compatibility. Although intensive researches had been made to overcome the shortcomings, a preferable result was not obtained.

U.S. Patent No. 4,358,563 discloses a resin composition comprising 100 parts by weight of a high molecular weight polymer having a repeating unit an aromatic carbonate and about 1 ∼ 10 parts of a polyolefin selected from the group consisting of polyethylene or polypropylene. In the resin composition, the compatibility between polycarbonate and polyolefin had been improved by endcapping the polycarbonate with an aliphatic chain of which the structure is similar to polyolefin.

U.S. Patent No. 4,496,693 discloses a resin composition comprising a polycarbonate, a polyolefin or a modified polyolefin, and a catalyst increasing compatibility between the polycarbonate and the polyolefin. The catalyst is a hydride or oxide of an alkaline metal or an alkaline earth metal, and this catalyst results in improvement of the weld strength and delamination by increasing compatibility between the polycarbonate and the polyolefin.

U.S. Patent No. 4,245,058 discloses a polycarbonate resin composition comprising a high molecular weight aromatic polycarbonate which is based on a dihydric phenol, about 2 ∼ 6 parts by weight of an acrylate copolymer, and about 0.5 ∼ 4 parts by weight of aromatic polycarbonate of a polyolefin. The polycarbonate resin composition has good impact strength at high temperature as well as at low temperature by introducing an acrylate copolymer even though the amount of polyolefin is reduced. However, because the resin composition contains a high molecular weight polyolefin such as commercial polyethylene or polypropylene, the dispersion becomes poor and still a large amount of polyolefin is used to obtain desirable impact strength.

U.S. Patent No. 4,384,076 discloses a resin composition comprising 100 parts by weight of a polycarbonate resin, 0.3 to 10 parts by weight of a polyethylene resin, 0.3 to 10 parts by weight of an elastomeric acrylic graft copolymer, and 0.3 to 10 parts by weight of an isobutylene copolymer rubber. The resin composition has good impact resistance and chemical resistance to gasoline. However, a large amount of polyethylene is needed to improve the impact resistance, because a high molecular weight polyethylene is used.

Accordingly, the present inventors have developed a new polycarbonate resin composition with good dispersion property and high impact resistance with much less amount of a low molecular weight polyolefin rather than using a high molecular weight polyolefin. In particular, the impact resistance is kept without a big drop on recycling. It is believed that a low molecular weight polyolefin having a number average molecular weight from 1,000 to 20,000 g/mol is employed in the polycarbonate resin composition.

### Objects of the Invention

A feature of the present invention is the provision of a polycarbonate resin composition having high impact strength by introducing a polyolefin with a low molecular weight from 1,000 to 20,000 g/mol.

Another feature of the present invention is the provision of a polycarbonate resin composition having little impact strength drop on recycling by introducing a low molecular weight polyolefin.

A further object of the present invention is the provision of a polycarbonate resin composition having a good dispersion property by introducing a low molecular weight polyolefin.

The above and other objects and advantages of this invention will be apparent from the ensuing disclosure and appended claims.

### Summary of the Invention

The polycarbonate resin composition having high impact strength according to the present invention comprises (A) 100 parts by weight of a polycarbonate resin, (B) 0 to 10 parts by weight of a graft copolymer or an olefin copolymer, (C) 0 to 10 parts by weight of a thermoplastic resin obtained by polymerizing at least one monomer selected from the group consisting of a styrene, an α-methylstyrene, a halogen- or alkyl-substituted styrene, an acrylonitrile, a methacrylonitrile, a C₁-C₈ alkyl acrylate, a C₁-C₈ alkyl methacrylate, a maleic anhydride, an alkyl- or phenyl-substituted C₁-C₄ maleimide, and the mixtures thereof, and (D) 0.1 to 4 parts by weight of a polyolefin having a low number average molecular weight from 1,000 to 20,000 g/mol.

### Detailed Description of the Invention

The present invention relates to a polycarbonate resin composition comprising (A) a polycarbonate resin, (B) a graft copolymer resin or an olefin copolymer resin, (C) a thermoplastic resin, and (D) a polyolefin having a low number average molecular weight from 1,000 to 20,000 g/mol. The detailed description of each component is as follow.

### (A) Polycarbonate Resin

The polycarbonate resin (A) in the present invention is prepared by reacting a diphenol represented by the following formula (I) with a phosgene, a halogen formate or a carboxyldiester: 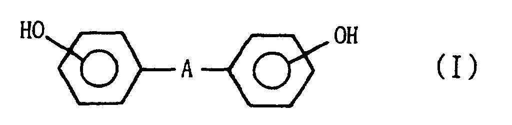 wherein A is C₁ ∼ C₅ alkylene, C₁ ∼ C₅ alkylidene, C₅ ∼ C₆ cycloalkylidene, S or SO₂ conjugated by a single bond.

The diphenols represented by the formula (I) include hydroquinone, resorcinol, 4,4'-dihydroxydiphenyl, 2,2-bis(4- hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane etc. Bisphenols such as 2, 2'-bis(4-hydroxyphenyl)propane, 1,1-bis(4-hydroxyphenyl)cyclohexane, and 2,2-bis(3,5-dichloro-4-hydroxyphenyl)propane are preferable. 2,2-bis(4- hydroxyphenyl)propane called "Bisphenol A" is more preferable.

A polycarbonate is conventionally prepared by reacting a diphenol with a phosgene through interface process or homogeneous phase process. The molecular weight of the polycarbonate is controlled by the amount of known chain terminators such as phenol, para-cresol, and para-isooctylphenol. The weight average molecular weight of the polycarbonate resin (A) of the present invention is preferably from 10,000 to 200,000, and more preferably from 15,000 to 80,000.

In the present invention, the polycarbonate resin may be a homopolymer or a copolymer of diphenols, and the mixtures thereof.

Polycarbonates suitable according to the invention may be branched in a known manner, namely by the incorporation of 0.05 to 2 mol%, relative to the total amount of diphenols used, of trifunctional or greater than trifunctional compounds, for example such compounds with three or more phenolic groups. Further, an aromatic polyester-carbonate resin that is prepared by polymerization in the presence of an ester precursor such as bifunctional carboxylate may be replaced for some or all of the polycarbonate resin.

### (B) Graft Copolymer Resin or Olefin Copolymer Resin

For preparing the polycarbonate resin according to the present invention, a graft copolymer or an olefin copolymer may be optionally used as an impact modifier.

A graft copolymer suitable for the present invention is prepared by grafting vinyl monomers onto the core structure of rubber to form a hard shell portion. The core-shell type copolymer according to the present invention is prepared by polymerizing at least one monomer selected from the group consisting of a diene rubber of C₄ ∼ C₆, an acrylate rubber of C₄ ∼ C₆, and a silicone rubber, and then by grafting at least one monomer selected from the group consisting of a styrene, an α-methylstyrene, a halogen- or alkyl-substituted styrene, an acrylonitrile, a methacrylonitrile, a C₁-C₈ alkyl acrylate, a C₁-C₈ alkyl methacrylate, a maleic anhydride, and a C₁-C₄ alkyl- or phenyl-substituted maleimide. The amount of the rubber is preferably from 20 to 90 parts by weight per the graft coploymer.

Suitable examples of the acrylate rubber include acrylate monomers such as methyl acrylate, ethyl acrylate, n-propyl acrylate, n-butyl acrylate, 2-ethylhexyl acrylate, hexyl methacrylate, and 2-ethylhexyl methacrylate. In the acrylate rubber, a crosslinking agent such as ethylene-glycol dimethacrylate, propylene-glycol dimethacrylate, 1,3-butylene glycoldimethacrylate, 1,4-butylene glycoldimethacrylate, allyl methacrylate, and triallyl cyanurate may be used.

The silicone rubber of the present invention is prepared from a cyclosiloxane, which includes hexamethyl cyclotrisiloxane, octamethyl cyclotetrasiloxane, decamethyl cyclopentasiloxane, dodecamethyl cyclohexasiloxane, trimethyl triphenylcyclotrisiloxane, tetramethyl tetraphenyl cyclotetrasiloxane, and octaphenyl cyclotetrasiloxane. For preparing the silicon rubber, a crosslinking agent may be employed such as trimethoxy methylsilane, triethoxy phenylsilane, tetramethoxy silane, and tetraethoxy silane.

An olefin copolymer suitable for the present invention is prepared by at least one olefin monomer selected from the group consisting of ethylene, propylene, isopropylene, butylene, and isobutylene. The olefin copolymer is prepared by using a Zieger-Natta catalyst or a metallocene catalyst. For preparing an olefin copolymer with a desirable structure, it is preferable to use a metallocene catalyst. For improving the dispersion property of the olefin copolymer in the polycarbonate, a functional monomer can be grafted onto the olefin copolymer to form functional groups. A maleic anhydride is preferably used as a functional monomer.

It is preferable to employ up to 10 parts by weight of the impact modifier per 100 parts of a polycarbonate resin in the resin composition of the present invention. If the impact modifier is used in excess of 10 parts by weight, the physical properties such as tensile strength, flexural strength, and flexural modulus are drastically deteriorated.

### (C) Thermoplastic resin

A thermoplastic resin is optionally used for preparing the polycarbonate resin composition according to the present invention. The thermoplastic resin is prepared by polymerizing at least one unsaturated monomer selected from the group consisting of a styrene, an α-methylstyrene, a halogen- or alkyl-substituted styrene, an acrylonitrile, a methacrylonitrile, a C₁-C₈ alkyl acrylate, a C₁-C₈ alkyl methacrylate, a maleic anhydride, an alkyl- or phenyl-substituted maleimide of C₁-C₄, and the mixtures thereof. It is preferable to polymerize at least one monomer selected from the group consisting of a styrene, a methacrylate methyl ester, and an acrylonitrile.

The thermoplastic resin suitable for the present invention is prepared by emulsion polymerization, suspension polymerization, solution polymerization or melt polymerization. And it is preferable to use a thermoplastic resin with weight average molecular weight from 15,000 to 200,000.

The thermoplastic resin may be used alone or a mixture of at least two resins. The thermoplastic resin is employed up to 10 parts by weight per 100 parts of a polycarbonate resin in the composition.

### (D) Low Molecular Weight Polyolefin

A polyolefin with a low molecular weight is used for preparing the polycarbonate resin composition according to the present invention to improve the impact strength. The number average molecular weight of the low molecular weight polyolefin of the present invention is preferably in the range from 1,000 to 20,000 g/mol. The low molecular weight polyolefin is prepared from at least one olefin monomer selected from the group consisting of ethylene, propylene, isopropylene, butylene, and isobutylene. The low molecular weight polyolefin is also prepared by cracking of a high molecular weight polyolefin. If the number average molecular weight of the low molecular weight polyolefin is in excess of 20,000 g/mol, impact strength of the resin composition is not good.

A low molecular weight polyolefin may be prepared by using a Ziegler-Natta catalyst, which is the common catalyst for olefin polymerization, or a metallocene catalyst. For preparing an olefin copolymer with a desirable structure, it is preferable to use a metallocene catalyst. Further, a low molecular weight polyolefin is prepared by pyrolysis or chemical scission of a high molecular weight polyolefin such as high-density polyethylene, low-density polyethylene, polypropylene.

For improving the dispersion property of the low molecular weight polyolefin in the polycarbonate, a functional monomer can be grafted onto the polyolefin to form functional groups. A maleic anhydride is preferably used as a functional monomer. Alternatively, the polyolefin may be modified into a graft copolymer in which a third resin such as polystyrene is grafted onto the polyolefin functioning as a backbone. In such structure, the third resin functions as branched chains.

It is preferable to use 0.1 to 4 parts by weight of the low molecular weight polyolefin or the modified low molecular weight polyolefin per 100 parts of the polycarbonate in this invention. It is more preferable to use 0.1 to 2 parts by weight of the low molecular weight polyolefin.

If the low molecular weight polyolefin or the modified low molecular weight polyolefin is used in excess of 4 parts by weight per 100 parts of polycarbonate, the physical properties such as tensile strength, flexural strength, and flexural modulus are drastically deteriorated.

The polycarbonate resin composition according to the present invention may include additives such as an inorganic filler, an ultraviolet stabilizer, a heat stabilizer, an antioxidant, a flame retardant, a lubricant, a pigment, a dye and the mixtures thereof. Preferred examples of the inorganic filler are glass fiber, carbon fiber, talc, silica, mica, alumina.

The resin composition according to the present invention is prepared in a form of pellet by extruding the blend with a conventional extruder.

The invention may be better understood by reference to the following Examples, which are intended for the purpose of illustration.

### Examples

(A) A polycarbonate resin, (B) a graft copolymer resin, (C) a styreneacrylonitrile copolymer, (D₁) a low molecular weight polyethylene, and (D₂) commercial high-density polyethylene in Examples 1-3 and Comparative Examples 1-2 are described as follows:

### (A) Polycarbonate resin

"Bisphenol A" type linear polycarbonate was used. The weight average molecular weight is about from 20,000 to 30,000.

### (B) Graft copolymer resin

A core-shell type graft copolymer in which 20 ∼ 30 parts by weight of a methacrylate methyl ester monomer grafted onto 70 ∼ 80 parts by weight of a butadiene rubber with about 0.1µm weight average particle diameter was used as an impact modifier in the resin composition of the present invention.

### (C) Styrene-Acrylonitrile Copolymer (SAN copolymer)

70 parts by weight of styrene and 30 parts by weight of acrylonitrile were put into 120 parts by weight of deionized water, and to the solution were 0.2 parts by weight of azobisisobutyronitrile and 0.5 parts by weight of tricalciumphosphate added as additives. Styrene-acrylonitrile copolymer was prepared by suspension polymerization, followed by washing, dehydrating, and drying. The styreneacrylonitrile copolymer was obtained in powder form.

### (D₁) Low Molecular Weight Polyethylene

A low molecular weight polyethylene was prepared by pyrolysis of a high-density polyethylene. The number average molecular weight of the low molecular weight polyethylene is about 4,000.

### (D₂) High-density Polyethylene

The number average molecular weight of the commercial high-density polyethylene was about 50,000.

The low molecular weight polyethylene was used in Examples 1-3, while the commercial high-density polyethylene was in Comparative Example 2. The component (D₁) and (D₂) were not employed in Comparative Example 1.

The amounts of the components used in Examples 1- 3 and Comparative Examples 1-2 are shown in Table 1.

**TABLE 1**

| components | Examples | | | Comparative Examples | |
|---|---|---|---|---|---|
| | 1 | 2 | 3 | 1 | 2 |
| (A) polycarbonate | 99 | 98 | 94 | 100 | 98 |
| (B) graft copolymer | - | - | 3 | - | - |
| (C) SAN copolymer | - | - | 2.5 | - | - |
| (D₁) low molecular weight polyethylene | 1 | 2 | 0.5 | - | - |
| (D₂) high-density polyethylene | - | - | - | - | 2 |

As shown in Table 1, the components were blended, and then to the blend were an antioxidant and a heat stabilizer added and mixed. The resultant was fed into a twin-screw extruder of L/D 29 and c =45mm. The resin compositions were prepared in pellet form by extruding the blend with the extruder. The resultant pellets were dried at 110°C for over 3 hours and were injection molded at the molding temperature of 280 ∼ 320 °C, into test specimens. The test specimens (64mm×12.7mm×3.2mm) for measuring Izod impact strength and the test specimens (127mm×127mm×2mm) for observing falling impact were prepared. In order to observe the change of impact strength of the recycled polycarbonate composition, the test specimens were ground and recycled to prepare new specimens. The recycling was repeated once, twice and thrice for each Example and Comparative Example.

The Notched Izod impact strength depending on the recycling number for each Example and Comparative Example was tested in accordance with ASTM D256. The falling impact strength was tested in accordance with ASTM D3029, which was carried out by falling a weight of 2 kg to the specimens at different heights of 600, 800 and 1,000 mm. The Notched Izod impact strength and falling impact strength for each Example and Comparative Example are shown in Table 2.

**TABLE 2**

| | recycling number | falling height (mm) | | | Izod impact strength (kgf ·cm/cm) |
|---|---|---|---|---|---|
| | | 600 | 800 | 1000 | |
| Example 1 | once | ductile | ductile | ductile | 70 |
| | twice | ductile | ductile | ductile | 68 |
| | thrice | ductile | ductile | ductile | 66 |
| Example 2 | once | ductile | ductile | ductile | 68 |
| | twice | ductile | ductile | ductile | 66 |
| | thrice | ductile | ductile | ductile | 65 |
| Example 3 | once | ductile | ductile | ductile | 65 |
| | twice | ductile | ductile | ductile | 64 |
| | thrice | ductile | ductile | ductile | 62 |
| Comp. Ex. 1 | once | ductile | ductile/brittle | brittle | 72 |
| | twice | brittle | brittle | brittle | 68 |
| | thrice | brittle | brittle | brittle | 22 |
| Comp. Ex. 2 | once | ductile | ductile | ductile/brittle | 68 |
| | twice | ductile | ductile/brittle | brittle | 65 |
| | thrice | brittle | brittle | brittle | 63 |

The ductile destruction means that, when a weight of 2 kg was fallen, the test specimen was not cracked but sunken in by impact, while the brittle destruction means that the specimen was cracked.

As shown in Table 2, if a polycarbonate resin employs a low molecular weight polyolefin and an impact modifier as an optional component, the fracture mode of the specimens was always "ductile" and the Izod impact strength was not reduced drastically even though the resin is recycled once, twice or thrice.

As shown in Table 2, Comparative Example 1 in which consists of a polycarbonate resin alone shows that the Izod impact strength is high at the first specimens, but as the specimens are recycled, the falling impact test shows a rapid change from "ductile" to "brittle", and that the Izod impact strength was poor. Comparative Example 2 in which a conventional high-density polyethylene having a high molecular weight shows that the impact strength of the polycarbonate resin is improved. However, in the Comparative Example, the impact is hardly improved when the specimens are recycled, compared with the compositions of Examples 1-3. In addition, the composition of Comparative Example 2 shows a delamination due to the low dispersion of the high-density polyethylene in polycarbonate.

## Claims

1. A polycarbonate resin composition having high impact strength, which comprises:
(A) 100 parts by weight of a polycarbonate resin;
(B) 0 to 10 parts by weight of a graft copolymer or an olefin copolymer;
(C) 0 to 10 parts by weight of a thermoplastic resin obtained by polymerizing at least one monomer selected from the group consisting of a styrene, an α-methylstyrene, a halogen- or alkyl-substituted styrene, an acrylonitrile, methacrylonitrile, a C₁-C₈ alkyl acrylate, a C₁-C₈ alkyl methacrylate, a maleic anhydride, an alkyl- or phenyl-substituted C₁-C₄ maleimide, and the mixtures thereof; and
(D) from 0.1 to 4 parts by weight of a low molecular weight polyolefin having a number average molecular weight from 1,000 to 20,000 g/mol.

2. The polycarbonate resin composition of claim 1 wherein said graft copolymer (B) is prepared by polymerizing at least one monomer selected from the group consisting of a diene rubber of C₄ ∼ C₆, an acrylate rubber of C₄ ∼ C₆, and a silicone rubber, and then by grafting at least one monomer selected from the group consisting of a styrene, an α-methylstyrene, a halogen- or alkyl-substituted styrene, an acrylonitrile, a methacrylonitrile, a C₁-C₈ alkyl acrylate, a C₁-C₈ alkyl methacrylate, a maleic anhydride, and a C₁-C₄ alkyl- or phenyl-substituted maleimide, and the amount of said rubber is preferably from 20 to 90 parts by weight per the graft copolymer.

3. The polycarbonate resin composition claim 1 wherein said olefin copolymer (B) is prepared by at least one olefin monomer selected from the group consisting of ethylene, propylene, isopropylene, butylene, and isobutylene.

4. The polycarbonate resin composition of claim 1 wherein said low molecular weight polyolefin(D) is prepared from at least one olefin monomer selected from the group consisting of ethylene, propylene, isopropylene, butylene, and isobutylene.

5. The polycarbonate resin composition of claim 1 wherein said low molecular weight polyolefin (D) is prepared by cracking of a high molecular weight polyolefin.

6. The polycarbonate resin composition of claim 1 wherein said low molecular weight polyolefin(D) is grafted with a functional monomer to form a functional group.

7. The polycarbonate resin composition of claim 6 wherein said functional monomer is maleic anhydride.

8. The polycarbonate resin composition of claim 1 wherein said low molecular weight polyolefin(D) is modified into a graft copolymer in which a third resin is grafted onto the polyolefin functioning as a backbone, with the third resin functioning as branched chains.

9. The polycarbonate resin composition of claim 8 wherein said third resin is polystyrene.

10. The polycarbonate resin composition of claim 1 wherein said low molecular weight polyolefin(D) is a low molecular weight polyethylene or a modified low molecular weight polyethylene.

11. The polycarbonate resin composition of claim 1 wherein said low molecular weight polyolefin(D) is used in the amount of 0.1 to 2 parts by weight.

12. The polycarbonate resin composition of claim 1 further comprising an inorganic filler, a heat stabilizer, an antioxidant, a light stabilizer, a pigment, and/or a dye.

13. A molded article prepared from the polycarbonate resin composition of claim 1.

## Patentansprüche

1. Polycarbonatharzzusammensetzung mit hoher Schlagzähigkeit, umfassend:
(A) 100 Gewichtsanteile eines Polycarbonatharzes;
(B) 0 bis 10 Gewichtsanteile eines Pfropfcopolymers oder eines Olefincopolymers;
(C) 0 bis 10 Gewichtsanteile eines thermoplastischen Harzes, erhalten durch Polymerisieren von mindestens einem Monomer ausgewählt aus der Gruppe aus einem Styrol, einem α-Methylstyrol, einem halogen- oder alkylsubstituierten Styrol, einem Acrylnitril, Methacrylnitril, einem C₁-C₈ Alkylacrylat, einem C₁-C₈ Alkylmethacrylat, einem Maleinsäureanhydrid, einem alkyl- oder phenylsubstituierten C₁-C₄ Maleimid, und Mischungen davon; und
(D) von 0,1 bis 4 Gewichtsanteilen eines Polyolefins mit niedrigem Molekulargewicht, welches ein zahlenmittleres Molekulargewicht von 1.000 bis 20.000 g/mol hat.

2. Polycarbonatharzzusammensetzung nach Anspruch 1, worin das Pfropfcopolymer (B) hergestellt wird durch Polymerisieren von mindestens einem Monomer ausgewählt aus der Gruppe aus einem C₄∼C₆ Diengummi, einem C₄∼C₆ Acrylatgummi und einem Silikongummi, und dann durch Pfropfen von mindestens einem Monomer ausgewählt aus der Gruppe aus einem Styrol, einem α-Methylstyrol, einem halogen- oder alkylsubstituierten Styrol, einem Acrylnitril, einem Methacralnitril, einem C₁-C₈ Alkylacrylat, einem C₁-C₈ Alkylmethacrylat, einem Maleinsäureanhydrid und einem C₁-C₄ alkyl- oder phenylsubstituierten Maleimid, und die Menge des Gummis ist bevorzugt von 20 bis 90 Gewichtsteilen pro Pfropfcopolymer.

3. Polycarbonatharzzusammensetzung nach Anspruch 1, worin das Olefincopolymer (B) hergestellt wird durch mindestens ein Olefinmonomer ausgewählt aus der Gruppe aus Ethylen, Propylen, Isopropylen, Butylen und Isobutylen.

4. Polycarbonatharzzusammensetzung nach Anspruch 1, worin das Polyolefin mit niedrigem Molekulargewicht (D) erhalten wird aus mindestens einem Olefinmonomer ausgewählt aus der Gruppe aus Ethylen, Propylen, Isopropylen, Butylen und Isobutylen.

5. Polycarbonatharzzusammensetzung nach Anspruch 1, worin das Polyolefin mit niedrigem Molekulargewicht (D) erhalten wird durch das Spalten eines Polyolefins mit hohem Molekulargewicht.

6. Polycarbonatharzzusammensetzung nach Anspruch 1, worin das Polyolefin mit niedrigem Molekulargewicht (D) mit einem funktionellen Monomer gepfropft wird, um eine funktionelle Gruppe zu bilden.

7. Polycarbonatharzzusammensetzung nach Anspruch 6, worin das funktionelle Monomer Maleinsäureanhydrid ist.

8. Polycarbonatharzzusammensetzung nach Anspruch 1, worin das Polyolefin mit niedrigem Molekulargewicht (D) zu einem Pfropfcopolymer modifiziert wird, bei dem ein drittes Harz auf das Polyolefin, welches als Rückgrat funktioniert, gepfropft wird, wobei das dritte Harz als verzweigte Ketten fungiert.

9. Polycarbonatharzzusammensetzung von Anspruch 8, wobei das dritte Harz ein Polystyrol ist.

10. Polycarbonatharzzusammensetzung nach Anspruch 1, worin das Polyolefin mit niedrigem Molekulargewicht (D) ein Polyethylen mit niedrigem Molekulargewicht oder ein modifiziertes Polyethylen mit niedrigem Molekulargewicht ist.

11. Polycarbonatharzzusammensetzung nach Anspruch 1, worin das Polyolefin mit niedrigem Molekulargewicht (D) in einer Menge von 0,1 bis 2 Gewichtsteilen verwendet wird.

12. Polycarbonatharzzusammensetzung nach Anspruch 1, weiter umfassend einen inorganischen Füllstoff, einen Wärmestabilisator, ein Antoxidianz, einen Lichtstabilisator, ein Pigment und/oder einen Farbstoff.

13. Formkörper, hergestellt aus der Polycarbonatharzzusammensetzung nach Anspruch 1.

## Revendications

1. Composition de résine de polycarbonate, présentant une résistance élevée aux chocs, qui comprend :
(A) 100 parties en poids d'une résine de polycarbonate ;
(B) 0 à 10 parties en poids d'un copolymère greffé ou d'un copolymère d'oléfine ;
(C) 0 à 10 parties en poids d'une résine thermoplastique obtenue par polymérisation d'au moins un monomère choisi dans le groupe se composant d'un styrène, d'un α-méthylstyrène, d'un styrène substitué par un halogène ou par un alkyle, d'un acrylonitrile, d'un méthacrylonitrile, d'un acrylate d'alkyle en C₁-C₈, d'un méthacrylate d'alkyle en C₁-C₈, d'un anhydride maléique, d'un maléimide en C₁-C₄ substitué par un alkyle ou par un phényle et des mélanges de ceux-ci ; et
(D) de 0,1 à 4 parties en poids d'une polyoléfine de faible poids moléculaire présentant un poids moléculaire moyen en nombre de 1 000 à 20 000 g/mole.

2. Composition de résine de polycarbonate selon la revendication 1, dans laquelle ledit copolymère greffé (B) est préparé par polymérisation d'au moins un monomère choisi dans le groupe se composant d'un caoutchouc de diène en C₄-C₆, d'un caoutchouc d'acrylate en C₄-C₆, et d'un caoutchouc silicone, et ensuite par greffage d'au moins un monomère choisi dans le groupe se composant d'un styrène, d'un α-méthylstyrène, d'un styrène substitué par un halogène ou par un alkyle, d'un acrylonitrile, d'un méthacrylonitrile, d'un acrylate d'alkyle en C₁-C₈, d'un méthacrylate d'alkyle en C₁-C₈, d'un anhydride maléique, d'un maléimide substitué par un groupe alkyle en C₁-C₄ ou par un groupe phényle, et la quantité dudit caoutchouc est de préférence de 20 à 90 parties en poids du copolymère greffé.

3. Composition de résine de polycarbonate selon la revendication 1, dans laquelle ledit copolymère d'oléfine (B) est préparé à l'aide d'au moins un monomère oléfinique choisi dans le groupe se composant d'éthylène, de propylène, d'isopropylène, de butylène, et d'isobutylène.

4. Composition de résine de polycarbonate selon la revendication 1, dans laquelle ladite polyoléfine de faible poids moléculaire (D) est préparée à partir d'au moins un monomère oléfinique choisi dans le groupe se composant d'éthylène, de propylène, d'isopropylène, de butylène, et d'isobutylène.

5. Composition de résine de polycarbonate selon la revendication 1, dans laquelle ladite polyoléfine de faible poids moléculaire (D) est préparée par craquage d'une polyoléfine de poids moléculaire élevé.

6. Composition de résine de polycarbonate selon la revendication 1, dans laquelle ladite polyoléfine de faible poids moléculaire (D) est greffée avec un monomère fonctionnel pour former un groupe fonctionnel.

7. Composition de résine de polycarbonate selon la revendication 6, dans laquelle ledit monomère fonctionnel est un anhydride maléique.

8. Composition de résine de polycarbonate selon la revendication 1, dans laquelle ladite polyoléfine de faible poids moléculaire (D) est modifiée en un copolymère greffé dans lequel une troisième résine est greffée sur la polyoléfine fonctionnant comme un squelette, la troisième résine fonctionnant comme des chaînes ramifiées.

9. Composition de résine de polycarbonate selon la revendication 8, dans laquelle ladite troisième résine est un polystyrène.

10. Composition de résine de polycarbonate selon la revendication 1, dans laquelle ladite polyoléfine de faible poids moléculaire (D) est un polyéthylène de faible poids moléculaire ou un polyéthylène de faible poids moléculaire modifié.

11. Composition de résine de polycarbonate selon la revendication 1, dans laquelle ladite polyoléfine de faible poids moléculaire (D) est utilisée en une quantité de 0,1 à 2 partie en poids.

12. Composition de résine de polycarbonate selon la revendication 1, comprenant en outre une charge inorganique, un stabilisant thermique, un antioxydant, un photostabilisant, un pigment, et/ou un colorant.

13. Objet moulé préparé à partir de la composition de résine de polycarbonate selon la revendication 1.
